(19) **Europäisches Patentamt**

**European Patent Office**

**Office européen des brevets**

(11) **EP 1 366 574 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(21) Anmeldenummer: **02719645.0**

(22) Anmeldetag: **28.02.2002**

(51) Int Cl.⁷: **H04B 1/40**, H04Q 7/32

(86) Internationale Anmeldenummer:
**PCT/DE2002/000731**

(87) Internationale Veröffentlichungsnummer:
**WO 2002/073820 (19.09.2002 Gazette 2002/38)**

(54) **ANORDNUNG ZUR ZEITSTEUERUNG FÜR MOBILE KOMMUNIKATIONSSYSTEME**

ARRANGEMENT FOR THE TIME CONTROL OF MOBILE COMMUNICATION SYSTEMS

SYSTEME DE COMMANDE DE SYNCHRONISATION POUR DES SYSTEMES DE COMMUNICATION MOBILES

(84) Benannte Vertragsstaaten:
**DE FR GB IT**

(30) Priorität: **08.03.2001 DE 10111204**
**15.03.2001 DE 10112481**

(43) Veröffentlichungstag der Anmeldung:
**03.12.2003 Patentblatt 2003/49**

(73) Patentinhaber: **Infineon Technologies AG**
**81669 München (DE)**

(72) Erfinder:
• **GUNZELMANN, Bertram**
**86163 Augsburg (DE)**

• **WENZEL, Dietmar**
**81549 München (DE)**
• **LINNENBERG, Gerhard**
**86163 Augsburg (DE)**

(74) Vertreter: **Lange, Thomas, Dr.**
**Patentanwälte**
**Lambsdorff & Lange**
**Dingolfinger Strasse 6**
**81673 München (DE)**

(56) Entgegenhaltungen:
**WO-A-98/21819      WO-A-99/26336**
**WO-A-99/27651      US-A- 6 061 704**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Anordnung sowie ein Verfahren zur Zeitsteuerung einer Sende- und/oder Empfangseinrichtung in einer Mobilstation eines Kommunikationssystems, wobei die Sende- und/oder Empfangseinrichtung zum Senden/Empfangen von Signalen unterschiedlicher Mobilfunkstandards mit differierenden Zeitrastern ausgelegt ist.

In Sende- und Empfangseinrichtungen von Mobilstationen sind eine Vielzahl von Aktionen auszulösen und Steuersignale zu erzeugen, die zeitlich mit einem speziellen, Mobilfunkstandard-spezifischen Zeitraster korreliert sind.

In den letzten Jahren haben sich in dem Mobilfunkbereich eine Reihe unterschiedlicher Standards etabliert, die fortentwickelt oder in Zukunft durch neue Standards ersetzt werden. Bekannte Beispiele für Mobilfunkstandards sind GSM (Global System for Mobile Communications), die als EDGE-(Enhanced Data Services for GSM Evolution-) Standard bezeichnete 8PSK-(8-Phase Shift Keying-)Weiterentwicklung von GSM, sowie verschiedene auf CDMA (Code Division Multiple Access) basierende Standards der dritten Mobilfunkgeneration wie beispielsweise UMTS (Universal Mobile Telecommunication System). Mit MBS (Mobile Broadband System) ist derzeit bereits ein Mobilfunkstandard der vierten Generation in der Entwicklung.

Mit dem Vorhandensein von unterschiedlichen beziehungsweise konkurrierenden Standards wachsen die Anforderung an Mobilstationen für den Mobilfunk. Gewünscht werden Mobilstationen, die mehrere Mobilfunksysteme-beziehungsweise Standards gleichzeitig unterstützen können. Dies setzt voraus, dass die Mobilstation die unterschiedlichen Zeitraster der einzelnen Standards erzeugen und darauf basierend geeignete Ereignissteuerungsprozesse durchzuführen vermag.

Dabei tritt die Schwierigkeit auf, dass unterschiedliche Mobilfunkstandards in der Regel inkommensurable Zeitraster verwenden, d.h. die Zeitraster können in der Regel nicht durch eine einfache Taktteilung ineinander übergeführt werden. Folglich werden bisher in Mobilstationen, die unterschiedliche Mobilfunkstandards unterstützen, für jeden Standard eine separate Anordnung zur Zeitsteuerung der Mobilstation verwendet und mit einem auf den Standard genau angestimmten Systemtakt versorgt. Diese Lösung erfüllt die funktionstechnischen Anforderungen, weist jedoch den Nachteil eines hohen Bedarfs an Chipfläche beziehungsweise Bauelementen auf, weil für die unterschiedlichen Systemtaktquellen und Zeitsteuerungen stets eine Vielzahl von Schaltungsblöcken benötigt werden.

Unterschiedliche Systemtaktfrequenzen in einem Chip erschweren darüber hinaus die gesamte Funktionalität des Bauelements, weil neben der Steuerung von Ereignissen auch Signalverarbeitungsprozesse wie beispielsweise die D/A-Umsetzung von der Systemtaktfrequenz abhängig sind. Ein weiterer Nachteil einer derartigen Lösung besteht darin, dass der Aufwand für den Entwurf einer integrierten Schaltung mit unterschiedlichen Systemtakt-Domänen insbesondere im Hinblick auf die Synthese und die Testbarkeit des Entwurfs deutlich erhöht ist.

Der Erfindung liegt die Aufgabe zugrunde, eine Anordnung zur Zeitsteuerung einer Sende- und Empfangseinrichtung in einer Mobilstation zu schaffen, welche günstige Implementierungsvoraussetzungen bietet und insbesondere einen kleinen Chipflächenbedarf aufweist. Darüber hinaus zielt die Erfindung darauf ab, ein Verfahren zur Zeitsteuerung einer Sende- und Empfangseinrichtung in einer Mobilstation anzugeben, welches die Unterstützung mehrerer Mobilfunkstandards ermöglicht und dabei einen geringen Implementierungsaufwand erforderlich macht.

Die der Erfindung zugrunde liegende Aufgabenstellung wird durch die Merkmale der unabhängigen Ansprüche gelöst.

Demnach weist die Anordnung zur Zeitsteuerung ein Systemtakt-Erzeugungsmittel zum Erzeugen eines für unterschiedliche Mobilfunkstandards mit differierenden Zeitrastern einheitlichen Systemtaktes auf. Ein wesentlicher Gesichtspunkt der Erfindung besteht darin, dass dieser standardübergreifende Systemtakt mittels eines Taktteilermittels, welcher einen Steuereingang aufweist, über welchen die mittlere Periodendauer eines Ausgangstaktes einstellbar ist, in einen Ausgangtakt gewandelt wird, welcher entsprechend einem an den Steuereingang anliegenden Steuerparameter einem bestimmten, ausgewählten Zeitraster unter den differierenden Zeitrastern entspricht. Auf der Grundlage des von dem Taktteilermittel erhaltenen standardspezifischen Ausgangstaktes sowie von in der Regel ebenfalls standardabhängiger Ereignisinformation wird von einem Mittel zur Ereignissteuerung die zeitliche Steuerung von Ereignissen in der Sende- und Empfangseinrichtung übernommen.

Insbesondere ermöglicht die Erfindung die Verwendung eines Systemtakt-Erzeugungsmittels, dessen Taktfrequenz (Systemtakt) kein gemeinsames vielfaches der Taktfrequenzen der differierenden Zeitraster ist.

Eine weitere vorteilhafte Ausgestaltung der Erfindung kennzeichnet sich dadurch, dass das vorzugsweise digitale Taktteilermittel derart ausgelegt ist, dass die Taktfrequenzen der differierenden Zeitraster gemäß einem Teilerfaktor der Form K/L, wobei L eine ganze Zahl ist, die insbesondere keine Potenz zur Basis 2 ist, insbesondere also gemäß einem beliebigen rationalen Teilerfaktor, aus der Taktfrequenz des Systemtaktes ableitbar ist. Dies ermöglicht die Unterstützung praktisch beliebiger Mobilfunkstandards, d.h. auch von solchen Standards, deren Zeitraster in keinem besonders "einfachen" Verhältnis zueinander stehen, durch die erfindungsgemäße Anordnung.

Eine weitere vorteilhafte Ausgestaltung der erfindungsgemäßen Anordnung kennzeichnet sich dadurch, dass das Taktteilermittel einen vollständig digitalen Taktteiler einsetzt. Analoge Schaltungsteile, wie z.B. PLLs (Phase Lok-

ked Loop), mit denen ebenfalls praktisch beliebige rationale Teilerverhältnisse erreichbar sind, jedoch im allgemeinen nur mit verhältnismäßig hohem Aufwand, werden also nicht benötigt. Aufgrund der ausschließlich digitalen Realisierung des Taktteilers ist dessen Genauigkeit in Abhängigkeit einer Wortbreite der zu verarbeitenden Digitalwerte sowie des Systemtakts nach Wunsch wählbar und frei von Toleranzen einstellbar.

Ein erstes bevorzugtes Ausführungsbeispiel des erfindungsgemäßen Taktteilermittels kennzeichnet sich dadurch, dass der digitale Taktteiler einen Phasenakkumulator umfasst, welcher mit dem Systemtakt oder einem von dem Systemtakt abgeleiteten Takt ein Phaseninkrement aufaddiert, dessen Wert durch Programmierung variabel vorgebbar ist. Obgleich bei der Akkumulation des Phaseninkrements eine mit der Zeit anwachsende Abweichung zwischen dem Ausgangstakt und dem gewünschten Zeitraster auftreten kann, kann diese Abweichung durch Wahl einer entsprechenden Wortbreite des Phasenakkumulators so gering gehalten werden, dass sie unter praktischen Gesichtspunkten akzeptabel bleibt. Der wesentliche Vorteil dieser Anordnung besteht darin, dass sie einen ausgesprochen einfachen Aufbau aufweist.

Ein alternatives, ebenfalls bevorzugtes zweites Ausführungsbeispiel der erfindungsgemäßen Anordnung kennzeichnet sich dadurch, dass das Taktteilermittel einen fraktionalen Taktteiler verwendet, der im zeitlichen Mittel eine exakte Taktteilung ermöglicht. Bei einem derartigen digitalen Taktteiler tritt im zeitlichen Mittel keine Abweichung zwischen den Phasen des Ausgangstaktes und des Taktes des zu reproduzierenden Zeitrasters auf.

Eine bevorzugte Ausführungsvariante eines solchen fraktionalen Taktteilers kennzeichnet sich dadurch, dass der fraktionale Taktteiler ein sowohl inkrementierbares als auch dekrementierbares Register umfasst, dass bei einem Teilerfaktor von K/L das Register mit dem Systemtakt oder einem aus dem Systemtakt abgeleiteten Takt mit dem Wert $\Delta INC = 2K$ inkrementiert wird, sofern der im Register gehaltene Wert kleiner 0 ist, und andernfalls mit dem Wert $\Delta DEC = 2 \cdot (K-L)$ dekrementiert wird, wobei K und L ganze positive Zahlen sind und K < L ist, und dass der Ausgangstakt durch einen Vorzeichenwechsel des in dem Register gehaltenen Werts bestimmt wird.

Die Genauigkeit der Taktteilung beim ersten Ausführungsbeispiel beziehungsweise der Schaltungsaufwand des zweiten Ausführungsbeispiels können dadurch vermindert werden, dass dem Taktteiler ein Vorteiler mit einem ganzzahligen Teiler, insbesondere einem Teiler welcher keine Potenz zur Basis 2 ist, vorgeordnet ist.

Im Hinblick auf die Ansteuerung der Ereignissteuerung auf der Grundlage des von dem Taktteilermittel erzeugten Ausgangstaktes kennzeichnet sich eine vorteilhafte Ausgestaltung der Erfindung dadurch, dass ein rücksetzbarer Zähler den Ausgangstakt zählt, und dass das Mittel zur Ereignissteuerung einen Tabellenspeicher umfasst, in welchem Ereignissen Zählerstände zugeordnet sind, die von dem gewählten Zeitraster beziehungsweise Mobilfunkstandard abhängen, und wobei das Mittel zur Ereignissteuerung ein Ereignis auslöst, wenn der Zähler den dem Ereignis zugeordneten Zählerstand erreicht hat. Das Rücksetzen des Zählers bei Erreichen eines bestimmten Zählerstands bewirkt die Reproduktion der Rahmenstruktur im Empfänger und ermöglicht, dass die Ereignisse in ständiger Wiederholung mit stets gleicher zeitlicher Lage innerhalb eines (Daten-)Rahmens ausgelöst werden.

Weitere vorteilhafte Ausgestaltungen der Erfindung sind in den Unteransprüchen angegeben.

Die Erfindung wird nachfolgend anhand von zwei Ausführungsbeispielen unter Bezugnahme auf die Zeichnung erläutert; in dieser zeigt:

Fig. 1 eine schematische Darstellung verschiedener charakteristischer Zeitdauern in den Standards GSM bzw. EDGE und TIA/EIA-136;

Fig. 2 eine schematische Darstellung eines Blockschaltbilds einer erfindungsgemäßen Anordnung;

Fig. 3 ein erstes Ausführungsbeispiel der Erfindung;

Fig. 4 eine schematische Darstellung des in Fig. 3 dargestellten Akkumulator-Registers;

Fig. 5 ein Ablaufdiagramm zur Erläuterung der erfindungsgemäßen Ereignissteuerung;

Fig. 6 ein zweites Ausführungsbeispiel der Erfindung; und

Fig. 7 ein Diagramm zur Erläuterung der Funktionsweise des zweiten Ausführungsbeispiels.

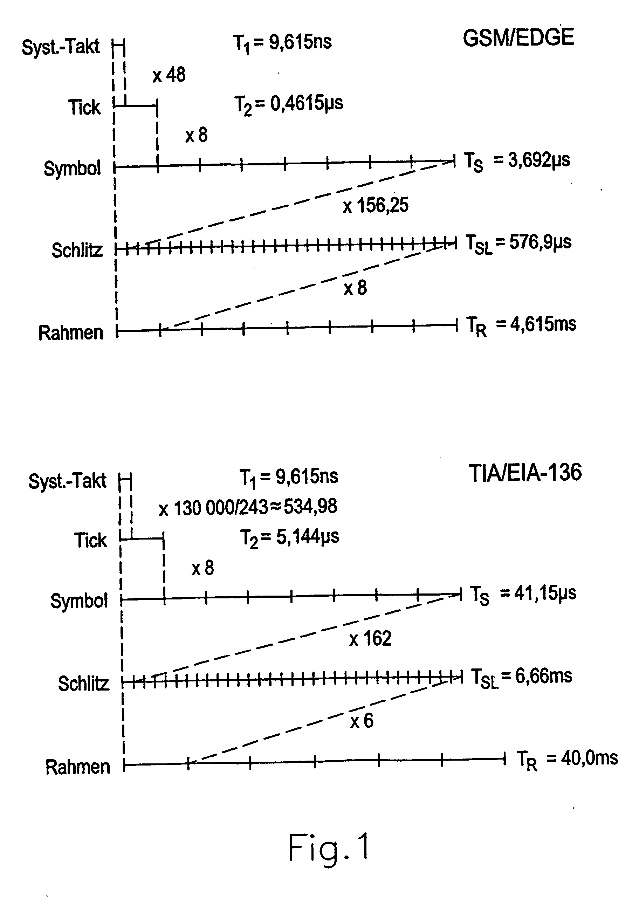

Fig. 1 zeigt für den GSM/EDGE-Standard (oberer Teil der Fig. 1) und für den TIA/EIA-136-Standard (unterer Teil der Fig. 1) Darstellungen zur Veranschaulichung der standardspezifischen Zeitvorgaben sowie einen einheitlichen Systemtakt, wie er in der Erfindung beispielsweise verwendet werden kann.

Bei Mobilfunksystemen ist die Datenübertragung in einer vorgegebenen, standardspezifischen Zeitstruktur organisiert. Die kleinste Zeitstruktur ist das Zeitraster, das sämtlichen Datenverarbeitungsabläufen in dem System zugrunde liegt. Eine Einheit des Zeitrasters wird als "Tick" bezeichnet und bildet die kleinste zu realisierende Zeiteinheit in dem System.

Basierend auf dem Zeitraster werden die im Standard festgelegten Zeitdauern generiert. Dies sind die Symbolzeitdauer $T_s$ sowie gegebenenfalls (je nach betrachtetem Mobilfunkstandard) die Zeitdauer für einen Zeitschlitz $T_{SL}$ und die Zeitdauer für einen Rahmen $T_R$.

GSM- und EDGE-Systeme weisen dieselbe Zeitstruktur auf. Die Rahmenzeitdauer beträgt $T_R$ = 4,615 ms und umfasst acht Zeitschlitze. Die Dauer eines Zeitschlitzes beträgt $T_{SL}$ = 576,9 μs und umfasst 156,25 Datensymbole. Ein Datensymbol wiederum weist eine Dauer $T_s$ = 3,692 μs auf und dauert 8 Ticks. Die Zeitdauer eines GSM-Ticks beträgt somit $T_2$ = 0,4615 μs.

Im TIA/EIA-136-Standard weist ein Rahmen die Dauer $T_R$ = 40,0 ms auf und enthält sechs Zeitschlitze. Ein Zeitschlitz dauert $T_{SL}$ = 6,66 ms und umfasst 162 Datensymbole. Einem einzelnen Datensymbol ist eine Datensymboldauer von $T_s$ = 41,15 μs zugeordnet. Wie beim GSM-Standard dauert ein Datensymbol 8 Ticks, d.h. das Zeitraster des TIA/EIA-136-Standard wird durch Ticks der Zeitdauer $T_2$ = 5,144 μs gebildet.

Gemäß der Erfindung ist vorgesehen, dass diese beiden Zeitraster aus ein und demselben Systemtakt abgeleitet werden. Als Beispiel wird ein Systemtakt von 104 MHz angenommen. Die Dauer eines Systemtakts $T_1$ beträgt dann $T_1$ = 1/104 μs = 9,615 ns.

Im Fall von GSM gilt $T_2 = 48 \cdot T_1$, d.h. 48 Systemtakte bilden einen Tick des GSM-Zeitrasters. Für TIA/EIA-136 gilt $T_2 = (130000/243) \cdot T_1 \approx 534,98 \cdot T_1$.

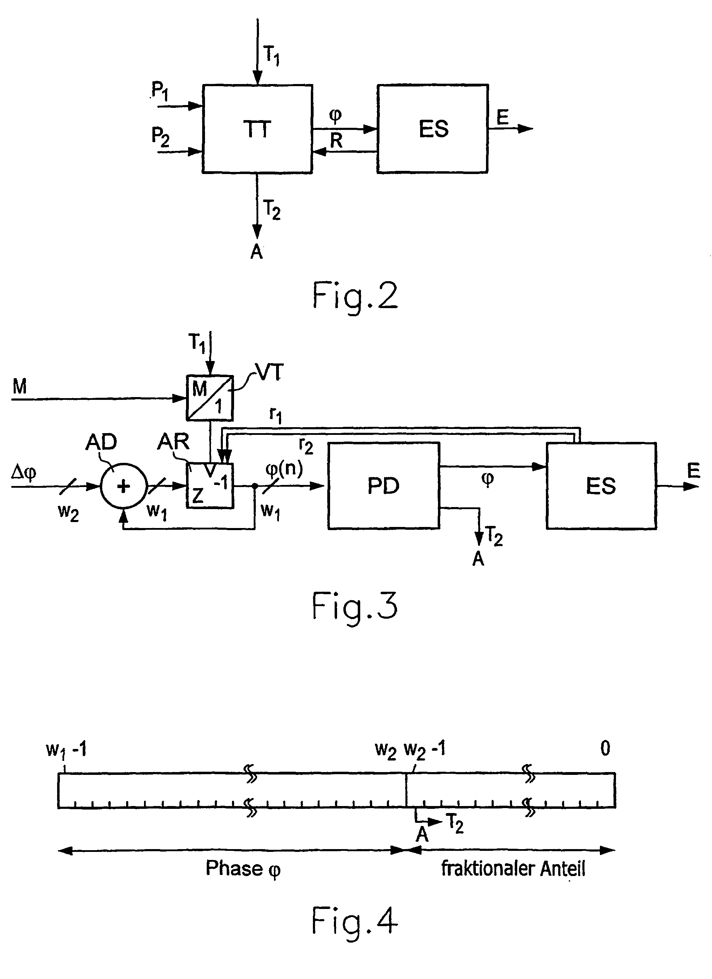

Fig. 2 zeigt eine schematische Darstellung der Struktur einer erfindungsgemäßen Anordnung zur Zeitsteuerung einer Sende-und Empfangseinrichtung in einer Mobilstation. Die Anordnung umfasst einen digitalen Taktteiler TT und eine Ereignissteuerung ES.

Der digitale Taktteiler TT wird mit dem einheitlichen Systemtakt $T_1$ (z.B. 104 MHz) versorgt. An einem Ausgang des digitalen Taktteilers steht ein Ausgangstaktsignal A zur Verfügung, dessen mittlere Periodendauer der Dauer $T_2$ eines Ticks entspricht. Dem digitalen Taktteiler TT wird mindestens ein Parameter $P_1$ beziehungsweise $P_2$ zugeführt, mittels welchem die mittlere Periodendauer des Ausgangssignals A bzw. Tick-Zeitdauer $T_2$ gemäß dem gewünschten Standard einstellbar beziehungsweise programmierbar ist.

Ferner leitet der Taktteiler TT aus dem Ausgangstaktsignal A ein Steuersignal ab, welches die augenblickliche Phase φ des Ausgangstaktsignals angibt. Dieses Steuersignal wird der Ereignissteuerung ES zugeleitet und versetzt diese in die Lage, vorgegebene Ereignisse E zu definierten Zeitpunkten beziehungsweise Phasenlagen durch einfachen Vergleich einer dem Ereignis zugeordneten Referenzphase mit der augenblicklichen Phase φ auszulösen. Über ein Rücksetzsignal R kann nach einer bestimmten, insbesondere Mobilfunkstandard-abhängigen Phase bzw. Zeitdauer ein Rücksetzen des Taktteilers TT erfolgen, um die Zyklizität (üblicherweise Rahmenzyklizität) des Gesamtablaufs zu gewährleisten.

Fig. 3 zeigt ein erstes Ausführungsbeispiel der erfindungsgemäßen Anordnung. Der Taktteiler TT umfasst einen Vorteiler VT, dem der Systemtakt $T_1$ eingegeben wird. Der Vorteiler weist ein einstellbares Teilungsverhältnis M auf, d.h. die am Ausgang des Vorteilers VT auftretende Taktzeitdauer beträgt $M \cdot T_1$, wobei M eine ganze positive Zahl ist. Der Vorteiler VT ist optional, er bietet jedoch für bestimmte Anwendungsfälle Vorteile, auf die später noch näher eingegangen wird.

Der Ausgang des Vorteilers VT wird dem Takteingang eines Phasenakkumulator-Registers AR zugeleitet. Der Eingang des Phasenakkumulator-Registers AR steht mit dem Ausgang eines Addierers AD in Verbindung. Dem einen Addierereingang des Addierers AD wird der um einen Takt verzögerte Ausgang des Phasenakkumulator-Registers AR zugeführt, während dem zweiten Addierereingang ein Phaseninkrement Δφ zugeleitet wird.

Der Ausgang des Phasenakkumulator-Registers AR bildet das Eingangssignal für einen Phasendekoder PD, dessen Arbeitsweise im folgenden noch näher erläutert wird. Der Phasendekoder PD erzeugt einerseits das gewünschte Ausgangstaktsignal A (mit der mittleren Periodendauer $T_2$) und andererseits das Phasensignal φ, welches gemäß der Darstellung in Fig. 2 der Ereignissteuerung ES mitgeteilt wird. Die Ereignissteuerung ES erzeugt hier zwei Rücksetzsignale $r_1$ und $r_2$ für das Phasenakkumulator-Register AR.

Im folgenden wird unter Bezugnahme auf die Fig. 4 die Arbeitsweise des in Fig. 3 gezeigten ersten Ausführungsbeispiels der Erfindung erläutert. Fig. 4 zeigt die Struktur des Phasenakkumulator-Registers AR und verdeutlicht darüber hinaus, wie der Inhalt des Registers AR in dem Phasendekoder PD dekodiert wird. Das Phasenakkumulator-Register AR hat in dem Ausführungsbeispiel eine Wortbreite $w_1$ Bits, die mit 0, 1, ..., $w_1$-1 durchnummeriert sind. Hiervon werden die $w_2$ niederwertigeren Bits der Stellen 0, 1, ..., $w_2$-1 als fraktionaler Teil interpretiert, während die verbleibenden höherwertigen Bits die Phase - gemessen in Ticks - des gewünschten Zeitrasters repräsentieren. Beispielsweise kann $w_1$ = 40 und $w_2$ = 25 gewählt werden.

zunächst werden je nach dem Mobilfunkstandard, dessen Zeitraster reproduziert werden soll, die Werte für den Vorteilerfaktor M und das Phaseninkrement Δφ eingegeben. Mit N wird im folgenden das zu realisierende Teilungsverhältnis $N = T_2/T_1$ bezeichnet. Bei (optionaler) Wahl eines geeigneten Vorteilerfaktors M wird das Phaseninkrement Δφ nach der folgenden Gleichung eingestellt:

$$\Delta\varphi = \text{rnd}\left(\frac{2^{w_2}}{N / M}\right) \qquad\qquad (1)$$

Dabei bezeichnet "rnd" die Rundung des in der Klammer stehenden Ausdrucks (sofern erforderlich) auf eine ganze Zahl. Zu Beginn eines Zeitrahmens wird der Inhalt des Phasenakkumulator-Registers AR, im folgenden auch als Zählerstand $\varphi(n)$ bezeichnet, zurückgesetzt. Das erstmalige Zurücksetzen des Phasenakkumulator-Registers AR erfolgt mit Hilfe des Rücksetzsignals $r_1$ und bewirkt das Zurücksetzen aller $w_1$ Bits des Registers AR. Die anschließend im Phasenakkumulator-Register AR stattfindende Phasenakkumulation lässt sich mit der Gleichung

$$\varphi(n) = \varphi(n - 1) + \Delta\varphi \qquad\qquad (2)$$

beschreiben, wobei n die Taktung durch den von dem Vorteiler VT ausgegebenen Takt $T_1 \cdot M$, sofern M = 1 durch den Systemtakt $T_1$, bezeichnet.

Üblicherweise enthält ein Zeitrahmen eine für den jeweiligen Mobilfunkstandard charakteristische Anzahl von Ticks. Für die GSM/EDGE-Standards ergeben sich 10000 Ticks pro Rahmen (10000 = 8 Zeitschlitze/Rahmen $\times$ 156,25 Symbole/Zeitschlitz $\times$ 8 Ticks/Symbol) und für den TIA/EIA-136-Standard ergeben sich 7776 Ticks pro Rahmen (7776 = 6 Zeitschlitze/Rahmen $\times$ 162 Symbole/Zeitschlitz $\times$ 8 Ticks/Symbol).

Der nicht fraktionale Anteil des Zählstands $\varphi(n)$ des Phasenakkumulator-Registers AR wird der Ereignissteuerung ES über das Phasensignal $\varphi$ ständig mitgeteilt. Die weitere Arbeitsweise des erfindungsgemäßen Taktteilers TT ist nun derart, dass bei allen folgenden Rahmen zu deren Beginn immer nur die Bits $w_2$ bis $w_1$-1 mit Hilfe des zweiten Rücksetzsignals $r_2$ zurückgesetzt werden, d.h. für das Beispiel des GSM/EDGE-Standard nach Erreichen des Werts 10000 und für das Beispiel des Tia/EIA-136-Standard nach Erreichen des Werts 7776. Durch das Zurücksetzen dieser höherwertigen Bits wird gewährleistet, dass der integrale Fehler allein durch die Wortbreite $w_2$ des "fraktionalen Ticks" bestimmt wird. Darüber hinaus wird durch das periodische Zurücksetzen des Phasenakkumulator-Registers AR ein Überlaufen desselben verhindert.

Das gemäß den vorgegebenen Parametern $\Delta\varphi$ und (optional) M geteilte Ausgangstaktsignal A kann an dem Bit der Stelle $w_2$-1 abgegriffen werden und hat näherungsweise ein Tastverhältnis von 50%.

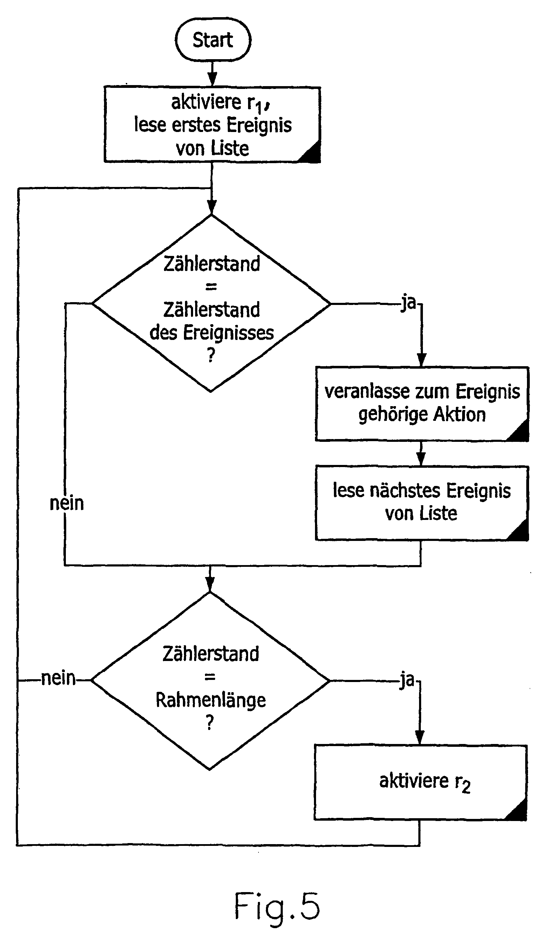

Die zeitliche Steuerung von Ereignissen im Mobilfunksender/Empfänger wird anhand der Tabelle 1 in Verbindung mit dem in Fig. 5 gezeigten Ablaufdiagramm erläutert.

Tabelle 1

| Nr. | Zählerstand | Ereignis |
|-----|-------------|----------|
| 1 | 10 | Ereignis 1 |
| 2 | 345 | Ereignis 2 |
| 3 | 1200 | Ereignis 3 |
| ... | ... | ... |
| ... | ... | ... |
| ... | ... | ... |
| K | 7768 | Ereignis K |

Tabelle 1 zeigt beispielhaft eine Liste der für einen aktuellen Rahmen gültigen Ereignisse für den Mobilfunkstandard TIA/EIA-136, wobei jedem Ereignis sein entsprechender Tick-Zählerstand (das heißt seine Phase $\varphi$) im Zeitrahmen zugeordnet ist. Das erste Ereignis soll bei 10 Ticks nach Rahmenanfang, d.h. beim Zählerstand 10 ausgelöst werden, die Auslösung des zweiten Ereignisses ist für den Zählerstand 345 vorgesehen und so weiter, und ein letztes Ereignis K ist für den Zählerstand 7768 vermerkt. Beim Zählerstand 7776 ist wie bereits erwähnt das Rahmenende erreicht und die Phase $\varphi$ wird auf den Wert 0 zurückgesetzt.

Gemäß Fig. 5 erfolgt nach einer Initialisierung des Senders/Empfängers ("Start") zunächst das Aktivieren des ersten Rücksetzsignals $r_1$. Im gleichen Schritt wird das erste Ereignis (das heisst das Ereignis 1) aus der Liste gelesen. Daraufhin wird in einem Vergleichsschritt ständig der Tick-Zählerstand $\varphi$ des Phasenakkumulator-Registers AR mit dem in der Liste notierten Zählerstand des Ereignisses 1 verglichen. Wird Übereinstimmung festgestellt, wird die zum Ereignis gehörige Aktion veranlasst und in einem darauffolgenden Schritt das nächste Ereignis aus der Liste ausgelesen. In jedem Fall (das heisst auch dann, wenn bei den vorhergehenden Zählerstand keine Übereinstimmung mit einem in der Liste notierten Zählerstand festgestellt wurde) wird eine nochmalige Überprüfung des Zählerstands in Bezug auf die Gesamtlänge des Rahmens durchgeführt. Sofern der Zählerstand angibt, dass das Ende des Rahmens erreicht ist, wird das zweite Rücksetzsignal $r_2$ aktiviert. In jedem Fall, d.h. auch dann, wenn das Rahmenende noch nicht erreicht ist, kehrt der Prozess anschließend für den nächsten Zählerstand zum ersten Vergleichsschritt zurück.

Bei dem ersten Ausführungsbeispiel können grundsätzlich zwei unterschiedliche Fehlerarten auftreten:

Ein erster Fehler wird durch die Endlichkeit der Taktfrequenz des Systemtakts $T_1$ bewirkt. Dadurch sind die Auslösezeitpunkte der Ereignisse mit einem Jitter behaftet. Ein Auslösezeitpunkt eines Ereignisses kann maximal um eine halbe Taktperiode von $T_1$ von seinem Sollzeitpunkt abweichen. Gemäß dem Ausführungsbeispiel ergibt sich für die halbe Taktperiode von $T_1$ ein Wert von 0,5·1/(104 MHz) = 4,808 ns. Für den Jitter-Fehler kann eine Gleichverteilung angenommen werden. Der RMS-Jitter beträgt in diesem Fall 1/3 des maximalen Jitters, d.h. ca. 1,6 ns.

Bezieht man diesen Jitter-Zeitfehler auf das zu erzeugende Zeitraster (d.h. auf $T_2$) beziehungsweise auf die Symbolzeitdauer, so erhält man für die im Ausführungsbeispiel gewählte Systemtaktfrequenz $T_1^{-1}$ = 104 MHz für den TIA/EIA-136-Standard die in Tabelle 2 angegebenen relativen Werte.

Tabelle 2

| Standard | rel. RMS-Jitter (Tick) | rel. RMS-Jitter (Symbol) |
|---|---|---|
| TIA/EIA-136 | 312 ppm | 39 ppm |

Der Jitter wird also vom Systemtakt $T_1$ bestimmt. Je höher die Systemtaktfrequenz, desto kleiner ist der Jitter.

Es wird darauf hingewiesen, dass der Jitter-Fehler nur dann auftritt, wenn das gewünschte Teilerverhältnis N nicht exakt durch das Phaseninkrement $\Delta\varphi$ eingestellt werden kann. Eine exakte Einstellung ist immer dann möglich, wenn N eine ganze Zahl ist, die als endliche Summe von Potenzen zur Basis 2 darstellbar ist.

Durch Verwendung des Vorteilers VT lässt sich der Jitter-Fehler in dem Fall eliminieren, dass N als Produkt einer ganzen Zahl und einer Summe von Potenzen zur Basis 2 geschrieben werden kann. Beispielsweise ist diese Bedingung für den hier betrachteten Systemtakt von 104 MHz für den GSM/EDGE-Standard mit N = 48 = $3.2^4$ erfüllt. In diesem Fall wird der Vorteilerfaktor N = 3 gesetzt und der verbleibende Teilerfaktor $2^4$ durch geeignete Wahl des Phaseninkrements $\Delta\varphi$ bei der Phasenakkumulation eingestellt. Bei $w_2$=25 ergibt sich in diesem Fall:

$$\Delta\varphi = \mathrm{rnd}\left(\frac{2^{w_2}}{N\ /\ M}\right) = 2^{w_2}\ /\ 16 \overset{w_2=25}{=} 2^{21} \qquad\qquad (3)$$

Die zweite Fehlerart beruht auf der endlichen Wortbreite $w_2$ des "fraktionalen Ticks" im Phasenakkumulator-Register AR und führt aufgrund der Quantisierung zu einem integralen Fehler, der sich von Rahmen zu Rahmen akkumuliert.

Bei GSM/EDGE tritt auch der integrale Fehler nicht auf, da bei Verwendung des Vorteilerfaktors (M = 3) in Gleichung 1 keine Rundung erforderlich ist, siehe Gleichung 3. Für den TIA/EIA-136-Standard gilt für eine Systemtaktfrequenz von 104 MHz, M = 1 und $w_2$ = 25:

$$\Delta\varphi = \mathrm{rnd}\left(\frac{2^{w_2}}{N\ /\ M}\right) = \mathrm{rnd}\left(\frac{2^{w^2}}{130000\ /\ 243}\right) \overset{w_2=25}{=} 62721 \qquad\qquad (4)$$

Der relative Rundungsfehler $\varepsilon$ beträgt daher:

$$\varepsilon = \frac{rnd\left(\dfrac{2^{w_2}}{N/M}\right)}{\dfrac{2^{w_2}}{N/M}} - 1 \overset{w_2=25}{\approx} 0{,}371 \; ppm \tag{5}$$

und liegt somit weit unterhalb der Einstellungenauigkeit von bekannten Systemtakt-Oszillatoren.

Der Rundungsfehler $\varepsilon$ bewirkt in jedem Tick eine Abweichung der berechneten Phase im Sinne einer Stauchung (bei positivem $\varepsilon$) oder einer Dehnung (bei negativem $\varepsilon$) der Zeitachse, die eine anwachsende Abweichung der Auslösezeitpunkte der Ereignisse vom Sollzeitpunkt mit größer werdender Rahmenzeit zur Folge hat. Der integrale Fehler am Ende des ersten Rahmens mit der Dauer $T_R = 40$ ms beträgt demnach beim TIA/EIA-136-Standard:

$$\varepsilon_{int} = \varepsilon \cdot T_R = 0{,}371 \; ppm \cdot 7776 \cdot 10 / 1944 \; ms = 14{,}84 \; ns \tag{6}$$

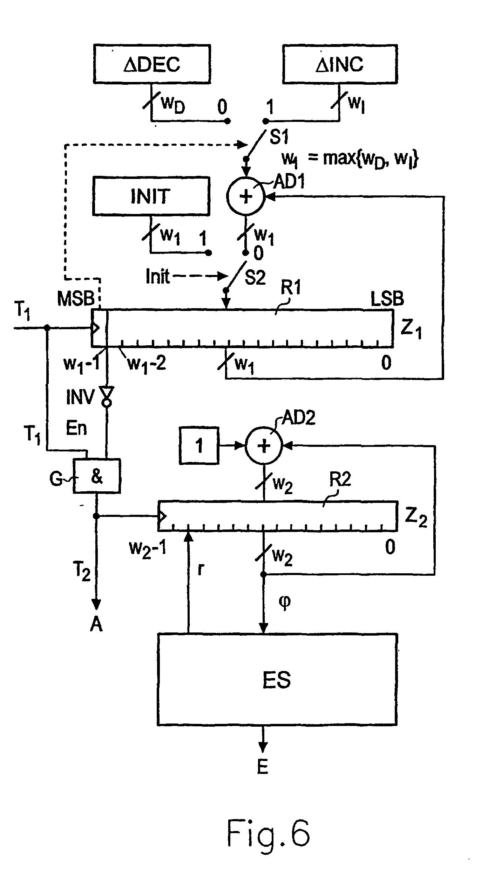

Fig. 6 zeigt ein zweites Ausführungsbeispiel der erfindungsgemäßen Anordnung zur Ereignissteuerung in einem Mobilfunkempfänger/sender. Die Schaltung umfasst einen ersten Zähler, der aus einem ersten Register R1 und einem ersten Addierer AD1 aufgebaut ist. Das erste Register R1 weist eine Wortbreite von $w_1$ Bits auf, wobei das höchstwertige Bit MSB (Most Significant Bit) an der Stelle $w_1$-1 des ersten Registers R1 ein Vorzeichenbit ist. Dieses Vorzeichenbit MSB steht über einen Inverter INV mit einem Eingang eines UND-Gatters G in Verbindung und realisiert an diesem Eingang ein Freigabesignal En. Der andere Eingang des UND-Gatters G wird von dem Systemtakt $T_1$ versorgt, welcher darüber hinaus dem Taktteingang des ersten Registers R1 zugeführt ist.

Am Ausgang des UND-Gatters G steht das Ausgangstaktsignal A mit der mittleren Taktperiode $T_2$ zur Verfügung, welche das gewünschte Zeitraster reproduziert.

Das Ausgangstaktsignal A wird zur Ansteuerung eines zweiten Zählers eingesetzt, welcher aus einem zweiten Register R2 und einem zweiten Addierer AD2 aufgebaut ist. Der zweite Zähler zählt die Takte des Ausgangssignals A und stellt den Zählwert in Form des Phasensignals $\varphi$ der Ereignissteuerung ES zur Verfügung. Die Ereignissteuerung ES führt in der bereits beschriebenen Weise eine Steuerung von diversen Ereignissen auf der Basis von Ereignisinformation durch und ist über ein einziges Rücksetzsignal r mit einem Rücksetzeingang des zweiten Registers R2 verbunden.

Der wesentliche Unterschied des zweiten Ausführungsbeispiels besteht darin, dass der erste Zähler AD1, R1 nicht nur inkrementierbar sondern auch durch einen zweiten einstellbaren Wert dekrementierbar ist. Wie im folgenden noch näher erläutert, wird dadurch ermöglicht, dass Teilerverhältnisse nicht nur durch Summen von Zweierpotenzen angenähert werden können (wie dies beim ersten Ausführungsbeispiel durch Aufsummieren des Phaseninkrements $\Delta\varphi$ erfolgt), sondern dass beliebige rationale Teilerverhältnisse, insbesondere auch solche mit sehr großen Zählern und Nennern, im Mittel exakt, d.h. ohne einen integralen Fehler, zu verwirklichen sind.

Ein gewünschtes rationales Teilerverhältnis $T_1/T_2$ betrage

$$\frac{T_1}{T_2} = \frac{K}{L}, \tag{7}$$

wobei K und L ganze positive Zahlen mit K < L sind.

Ein Dekrementwert $\Delta DEC$ und ein Inkrementwert $\Delta INC$ werden dann folgendermaßen initialisiert:

$$\begin{aligned}\Delta INC &= 2K \\ \Delta DEC &= 2 \cdot (K - L)\end{aligned} \tag{8}$$

Ferner kann ein Vorgabewert INIT = 2·K-L gesetzt werden.

Der nicht mit dem Ausgang des ersten Registers R1 verbundene zweite Eingang des ersten Addierers AD1 ist mit einem ersten Schalter S1 verbunden, über welchen dem ersten Addierer AD1 entweder der Wert $\Delta DEC$ (welcher

kleiner als 0 ist) oder der Wert ∆INC (welcher größer als 0 ist) zugeführt wird. Ein eingangsseitig des ersten Registers R1 angeordneter zweiter Schalter S2 ermöglicht wahlweise die Initialisierung des ersten Registers R1 mit dem Initialisierungswert INIT oder die Verbindung des Registereingangs mit dem Ausgang des ersten Addierers AD1.

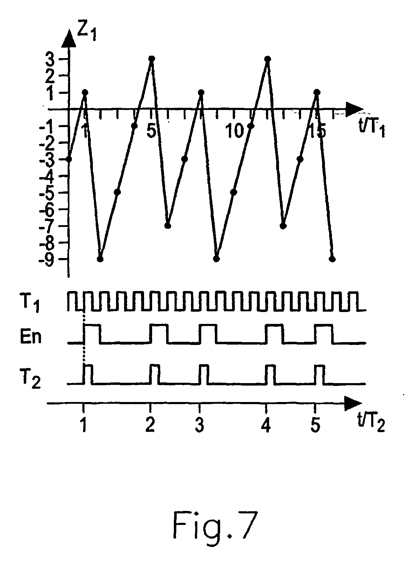

Die Arbeitsweise des fraktionalen Taktteilers wird unter Bezugnahme auf die Fig. 7 näher erläutert. Als Beispiel wird K = 2 und L = 7 betrachtet. Somit ergibt sich ∆INC = 4, ∆DEC = -10 und INIT ist -3. $Z_1$ bezeichnet den Zählerstand des ersten Registers R1.

Zunächst wird das erste Register R1 zum Zeitpunkt t = 0 mit dem Wert INIT = -3 durch Umlegen des zweiten Schalters $S_2$ auf die Stellung 1 initialisiert. Durch den Wert INIT wird die Nullphase des Ausgangstaktsignals A festgelegt. Nach dem Initialisierungsvorgang wird der zweite Schalter $S_2$ wieder in die Stellung 0 zurückgelegt.

Die Steuerung des ersten Schalters S1 erfolgt in Abhängigkeit von dem Wert des Vorzeichenbits MSB. Solange das Vorzeichenbit MSB gleich 1 ist, d.h. der Zählerstand $Z_1$ des ersten Registers R1 negativ ist, steht der erste Schalter $S_1$ in Stellung 1. Wird der Zählerstand $Z_1$ Null oder positiv, nimmt das Vorzeichenbit MSB den Wert 0 an. Dies bewirkt, dass der erste Schalter S1 in die Stellung 0 wechselt.

Diese Vorschrift hat zur Folge, dass das erste Register R1 bei einem negativen Zählerstand $Z_1$ inkrementiert wird, hingegen bei positivem Zählerstand $Z_1$ (oder bei $Z_1$ = 0) dekrementiert wird. Im Ergebnis schwankt der Zählerstand $Z_1$ ständig zwischen positiven und negativen Werten, wodurch ein periodischer Wechsel des Vorzeichenbits MSB an der $w_1$-1-ten Stelle des ersten Registers R1 erreicht wird.

Im oberen Teil der Fig. 7 ist der Zählerstand $Z_1$ über der Taktfolge $t/T_1$ des Systemtaktes $T_1$ dargestellt. Der Zählerstand $Z_1$ nimmt die Werte -3, 1, -9, -5, -1, 3, -7, -3, 1, -9, -5, -1, 2, -7, -3, 1, -9, ... an.

Im unteren Teil der Fig. 7 ist das Systemtaktsignal $T_1$, das Freigabesignal En und das aus $T_1$ und En abgeleitete Ausgabetaktsignal A bzw. $T_2$ dargestellt. Ferner ist die Taktfolge $t/T_2$ des erzeugten Zeitrasters dargestellt. Im zeitlichen Mittel gilt $T_2/T_1$ = 3,5 exakt.

Fig. 7 macht deutlich, dass der Takt $T_2$ des Ausgangstaktsignals kein Tastverhältnis von 50% aufweist. Dies ist bei den meisten Anwendungen jedoch kein Nachteil und außerdem kann durch eine weitere Teilung um den Faktor 2 dennoch ein näherungsweise symmetrisches Tastverhältnis erreicht werden.

Es wird darauf hingewiesen, dass bei diesem Ausführungsbeispiel Zähler und Nenner des Teilerverhältnisses frei wählbar sind, und es in der Regel nicht erforderlich ist, das Teilerverhältnis zu runden beziehungsweise zu quantisieren. Daher tritt (wie bereits erwähnt) kein integraler Fehler auf, wobei jedoch für bestimmte Verhältnisse relativ große Wortbreiten erforderlich werden. Die Wortbreite $w_1$ richtet sich dabei nach dem betragsmäßig größten darzustellenden Wert ∆DEC beziehungsweise ∆INC, wobei zur Darstellung als negative Zweierkomplementzahl bei ∆DEC ein weiteres Bit benötigt wird. Oftmals ist der Inkrementwert ∆INC betragsmäßig wesentlich kleiner als ∆DEC, so dass in der Regel für ∆INC eine Wortbreite $w_I$ < $w_D$ zur Darstellung ausreicht, siehe Fig. 6.

In Tabelle 3 sind für das Beispiel eines einheitlichen Systemtakts von 104 MHz und der Standards TIA/EIA-136 beziehungsweise GSM/EDGE die verschiedenen Werte für K, L, INIT, ∆INC, ∆DEC für den fraktionalen Teiler gemäß dem zweiten Ausführungsbeispiel angegeben. Für die Wortbreiten ergeben sich aus Tabelle 3 die Mindestwerte $w_D = w_1$ = 19 Bit, $W_I$ = 9 Bit und $w_2$ = 15 Bit.

Der Jitter-Fehler entspricht dem beim ersten Ausführungsbeispiel auftretenden Jitter-Fehler.

Tabelle 3

| Standard | K | L | INIT | ∆INC | ∆DEC |
|---|---|---|---|---|---|
| TIA/EIA-136 | 243 | 130000 | -126514 | 486 | -259514 |
| GSM/EDGE | 1 | 48 | -46 | 2 | -94 |

Zusammenfassend ist festzustellen, dass beide Ausführungsbeispiele die Verwendung eines einzigen Systemtaktes für Mehrstandard-Sender/Empfänger bei Teilungsverhältnissen ermöglichen, die weder einer Potenzzahl zur Basis 2 noch eine Summe von Potenzzahlen zur Basis 2 und auch nicht eines "einfachen" rationalen Teilungsverhältnisses $T_1/T_2$ = 1/(ganze Zahl) entsprechen müssen. Somit wird die Verwendung eines einheitlichen, standardübergreifenden Systemtakts (der in Abhängigkeit von den zu unterstützenden Standards natürlich möglichst günstig gewählt werden sollte) möglich, wodurch Entwurf und Implementierung eines solchen Mobilfunkempfängers/senders wesentlich vereinfacht werden.

**Patentansprüche**

**1.** Anordnung zur Zeitsteuerung einer Sende- und/oder Empfangseinrichtung in einer Mobilstation eines Kommunikationssystems, wobei die Sende- und/oder Empfangseinrichtung zum Senden/Empfangen von Signalen unterschiedlicher Mobilfunkstandards mit differierenden Zeitrastern ausgelegt ist, mit

- einem Systemtakt-Erzeugungsmittel zum Erzeugen eines einheitlichen Systemtaktes ($T_1$) für die differierenden Zeitraster,
- einem Taktteilermittel (TT), welchem der einheitliche Systemtakt ($T_1$) zugeführt wird, welcher einen Steuereingang aufweist, über welchen die mittlere Periodendauer eines Ausgangstaktes ($T_2$) einstellbar ist, und wobei durch Eingabe mindestens eines Steuerparameters an dem Steuereingang ein Ausgangstakt ($T_2$) entsprechend einem unter den differierenden Zeitrastern erzeugt wird, und
- einem Mittel zur Ereignissteuerung (ES), welches auf der Grundlage des von dem Taktteilermittel (TT) erzeugten Ausgangstaktes und von Ereignisinformation die zeitliche Steuerung von Ereignissen übernimmt.

2. Anordnung nach Anspruch 1,
   **dadurch gekennzeichnet,**

   - **dass** die Taktfrequenz des Systemtaktes kein gemeinsames Vielfaches der Taktfrequenzen der differierenden Zeitraster ist.

3. Anordnung nach Anspruch 1 oder 2,
   **dadurch gekennzeichnet,**

   - **dass** das Taktteilermittel (TT) derart ausgelegt ist, dass die Taktfrequenzen der differierenden Zeitraster gemäß einem Teilerfaktor der Form K/L, wobei K und L positive ganze Zahlen mit K < L sind, und wobei L keine Potenz zur Basis 2 ist, insbesondere gemäß einem beliebigen rationalen Teilerfaktor K/L, aus der Taktfrequenz des Systemtaktes ableitbar ist.

4. Anordnung nach einem der vorhergehenden Ansprüche,
   **dadurch gekennzeichnet,**

   - **dass** das Taktteilermittel (TT) einen vollständig digitalen Taktteiler (AR, AD; R1, AD1) einsetzt.

5. Anordnung nach Anspruch 4,
   **dadurch gekennzeichnet,**

   - **dass** der digitale Taktteiler einen Phasenakkumulator (AR, AD) umfasst, welcher mit dem Systemtakt ($T_1$) oder einem von dem Systemtakt abgeleiteten Takt ein Phaseninkrement ($\Delta\varphi$) aufaddiert, dessen Wert durch Programmierung variabel vorgebbar ist.

6. Anordnung nach Anspruch 4,
   **dadurch gekennzeichnet,**

   - **dass** der digitale Taktteiler (TT) einen fraktionalen Taktteiler (R1, AD1) verwendet, der im zeitlichen Mittel eine exakte Taktteilung ermöglicht.

7. Anordnung nach Anspruch 6,
   **dadurch gekennzeichnet,**

   - **dass** der fraktionale Taktteiler (R1, AD1) ein sowohl inkrementierbares als auch dekrementierbares Register (R1) umfasst,
   - **dass** bei einem Teilerfaktor von K/L das Register (R1) mit dem Systemtakt ($T_1$) oder einem aus dem Systemtakt abgeleiteten Takt mit dem Wert $\Delta$INC = 2K inkrementiert wird, sofern der im Register gehaltene Wert < 0 ist, und andernfalls mit dem Wert $\Delta$DEC = 2·(K-L) dekrementiert wird, wobei K und L ganze positive Zahlen sind und K < L ist, und
   - **dass** der Ausgangstakt ($T_2$) durch einen Vorzeichenwechsel des im Register (R1) gehaltenen Werts ($Z_1$) bestimmt wird.

8. Anordnung nach einem der Ansprüche 4 bis 7,
   **dadurch gekennzeichnet,**

- **dass** dem Taktteiler (AR, AD; R1, AD1) ein Vorteiler (VT) mit einem ganzzahligen Teiler, insbesondere einem Teiler welcher keine Potenz zur Basis 2 ist, vorgeordnet ist.

9. Anordnung nach einem der vorhergehenden Ansprüche,
   **dadurch gekennzeichnet,**

   - **dass** ein rücksetzbarer Zähler (AR, R2) den Ausgangstakt zählt, und
   - **dass** das Mittel zur Ereignissteuerung (ES) einen Tabellenspeicher umfasst, in welchem Ereignissen Zählerstände zugeordnet sind, die von dem gewählten Zeitraster abhängig sind, wobei das Mittel zur Ereignissteuerung (ES) ein Ereignis auslöst, wenn der rücksetzbare Zähler (AR, R2) den dem Ereignis zugeordneten Zählerstand erreicht hat.

10. Anordnung nach Anspruch 9,
    **dadurch gekennzeichnet,**

    - **dass** das Mittel zur Ereignissteuerung (ES) ein Rücksetzsignal (R; $r_1$, $r_2$, r) erzeugt, welches den rücksetzbaren zähler (AR, R2) gemäß dem ausgewählten Zeitraster zurücksetzt.

11. Anordnung nach einem der vorhergehenden Ansprüche,
    **dadurch gekennzeichnet,**

    - **dass** das Taktteilermittel (TT) ausgelegt ist, Zeitraster gemäß zumindest zwei der Standards GSM oder EDGE und TIA/EIA-136 und UMTS zu erzeugen.

12. Verfahren zur Zeitsteuerung einer Sende- und/oder Empfangseinrichtung in einer Mobilstationen eines Kommunikationssystems, wobei die Sende- und/oder Empfangseinrichtung zum Senden/Empfangen von Signalen unterschiedlicher Mobilfunkstandards mit differierenden Zeitrastern ausgelegt ist, mit den Schritten:

    - Erzeugen eines einheitlichen Systemtaktes ($T_1$) für die differierenden zeitraster;
    - Erzeugen eines Ausgangstaktes ($T_2$) entsprechend einem der differierenden Zeitraster auf der Basis des einheitlichen Systemtaktes ($T_1$) durch Vorgabe mindestens eines Steuerparameters, über welchen die mittlere Periodendauer des Ausgangstaktes ($T_2$) einstellbar ist; und
    - zeitliches Steuern von Ereignissen auf der Grundlage des erzeugten Ausgangstaktes ($T_2$) und von Ereignisinformation.

**Claims**

1. Arrangement for time control of a transmitting and/or receiving device in a mobile station in a communications system, with the transmitting and/or receiving device being designed to transmit/receive signals to different mobile radio standards with different time patterns, having

   - a system clock generating means for producing a standard system clock ($T_1$) for the different time patterns,
   - a clock divider means (TT) to which the standard system clock ($T_1$) is supplied, which clock divider means (TT) has a control input via which the mean period duration of an output clock ($T_2$) can be set, and with an output clock ($T_2$) being produced corresponding to one of the different time patterns, by inputting at least one control parameter at the control input, and
   - a means for event control (ES) which carries out the time control of events on the basis of the output clock, which is produced by the clock divider means (TT), and event information.

2. Arrangement according to Claim 1,
   **characterized**

   - **in that** the clock frequency of the system clock is not a common multiple of the clock frequencies of the different time patterns.

3. Arrangement according to Claim 1 or 2,
   **characterized**

- **in that** the clock divider means (TT) is designed such that the clock frequencies of the different time patterns can be derived from the clock frequency of the system clock using a division factor in the form K/L, where K and L are positive integers and K < L, and where L is not a power to base 2, in particular using any desired rational division factor K/L.

4. Arrangement according to one of the preceding claims,
   **Characterized**

   - **in that** the clock divider means (TT) uses a completely digital clock divider (AR, AD; R1, AD1).

5. Arrangement according to Claim 4,
   **characterized**

   - **in that** the digital clock divider has a phase accumulator (AR, AD) which uses the system clock ($T_1$) or a clock which is derived from the system clock to add a phase increment ($\Delta\varphi$) whose value can be predetermined variably by programming.

6. Arrangement according to Claim 4,
   **characterized**

   - **in that** the digital clock divider (TT) uses a fractional clock divider (R1, AD1) which allows exact clock division averaged over time.

7. Arrangement according to Claim 6,
   **characterized**

   - **in that** the fractional clock divider (R1, AD1) has a register (R1) which can not only be incremented but can also be decremented,
   - **in that**, with a division factor of K/L, the register (R1) is incremented using the system clock ($T_1$) or a clock which is derived from the system clock with the value $\Delta INC = 2K$, provided that the value held in the register is less than 0, and is otherwise decremented with the value $\Delta DEC = 2 \cdot (K-L)$, where K and L are positive integers and K < L, and
   - **in that** the output clock ($T_2$) is determined by a change in the mathematical sign of the value ($Z_1$) which is held in the register (R1).

8. Arrangement according to one of Claims 4 to 7,
   **characterized**

   - **in that** the clock divider (AR, AD; R1, AD1) is preceded by an initial divider (VT), with an integer divisor, in particular a divisor which is not a power to base 2.

9. Arrangement according to one of the preceding claims,
   **characterized**

   - **in that** a resettable counter (AR, R2) counts the output clock, and
   - **in that** the means for event control (ES) has a table memory in which events are associated with counts which are dependent on the chosen time pattern, with the means for event control (ES) initiating an event when the resettable counter (AR, R2) has reached the count which is associated with that event.

10. Arrangement according to Claim 9,
    **characterized**

    - **in that** the means for event control (ES) produces a reset signal (R; $r_1$, $r_2$, r) which resets the resettable counter (AR, R2) on the basis of the chosen time pattern.

11. Arrangement according to one of the preceding claims,
    **characterized**

- **in that** the clock divider means (TT) is designed to produce time patterns based on at least two of the standards GSM or EDGE and TIA/EIA-136 and UMTS.

12. Method for time control of a transmitting and/or receiving device in a mobile station in a communications system, with the transmitting and/or receiving device being designed to transmit/receive signals to different mobile radio standards with different time patterns, comprising the following steps:

- production of a standard system clock ($T_1$) for the different time patterns;
- production of an output clock ($T_2$) corresponding to one of the different time patterns on the basis of the standard system clock ($T_1$) by presetting at least one control parameter via which the mean period duration of the output clock ($T_2$) can be set; and
- time control of events on the basis on the output clock ($T_2$) which is produced, and time control of event information.

**Revendications**

1. Dispositif de commande de synchronisation d'un dispositif d'émission et/ou de réception dans une station mobile d'un système de communication, dans lequel le dispositif d'émission et/ou de réception est conçu pour l'émission/ la réception de signaux de standards téléphoniques mobiles différents ayant des trames de temps qui diffèrent, comprenant

- un moyen de production d'une cadence de système pour produire une cadence ($T_1$) de système unitaire pour les trames de temps qui diffèrent ;
- un moyen (TT) diviseur de cadence, auquel est envoyée la cadence ($T_1$) de système unitaire et qui a une entrée de commande par laquelle la durée moyenne de la période d'une cadence ($T_2$) de sortie peut être réglée et dans lequel, par introduction d'au moins un paramètre de commande sur l'entrée de commande, il est produit une cadence ($T_2$) de sortie correspondant à l'une parmi les trames de temps qui diffèrent ; et
- un moyen de commande (ES) d'événements qui, sur la base de la cadence de sortie produite par le moyen (TT) diviseur de cadence et d'une information d'événement, prend en charge la commande dans le temps d'événements.

2. Dispositif suivant la revendication 1, **caractérisé**

- **en ce que** la fréquence de la cadence de système n'est pas un multiple commun des fréquences de cadence des trames de temps qui diffèrent.

3. Dispositif suivant la revendication 1 ou 2, **caractérisé**

- **en ce que** le moyen (TT) diviseur de cadence est conçu de façon à ce que les fréquences de cadence des trames de temps qui diffèrent peuvent être déduites suivant un facteur de division de la forme K/L, K et L étant des nombres entiers positifs avec K < L et L n'étant pas une puissance de base 2, notamment suivant un facteur de division K/L rationnel quelconque, de la fréquence de la cadence du système.

4. Dispositif suivant l'une des revendications précédentes, **caractérisé**

- **en ce que** le moyen (TT) diviseur de cadence utilise un diviseur (AR, AD, R1, AD1) entièrement numérique.

5. Dispositif suivant la revendication 4, **caractérisé**

- **en ce que** le diviseur de cadence numérique comprend un accumulateur (AR, AD) de phase qui ajoute à la cadence ($T_1$) de système ou à une cadence dérivée de la cadence du système un incrément ($\Delta\varphi$) de phase dont la valeur peut être prescrite de manière variable par programmation.

6. Dispositif suivant la revendication 4, **caractérisé**

- **en ce que** le diviseur (TT) de cadence numérique utilise un diviseur (R1, AD1) de cadence fractionnaire qui permet une division exacte de cadence en moyenne temporelle.

**7.** Dispositif suivant la revendication 6, **caractérisé**

- **en ce que** le diviseur (R1, AD1) de cadence fractionnaire comprend un registre (R1) pouvant être tant incrémenté que décrémenté ;
- **en ce que** pour un facteur de division de K/L, le registre (R1) est incrémenté de la valeur $\Delta$INC = 2K par la cadence ($T_1$) de système ou par une cadence dérivée de la cadence du système dans le mesure où la valeur maintenue dans le registre est inférieure à 0 et sinon est décrémenté de la valeur $\Delta$DEC = 2(K-L), K et L étant des nombres entiers positifs et K < L ; et
- **en ce que** la cadence ($T_2$) de sortie est déterminée par un changement de signe de la valeur ($Z_1$) maintenue dans le registre (R1).

**8.** Dispositif suivant l'une des revendications 4 à 7, **caractérisé**

- **en ce qu'**il est monté en amont du diviseur (AR, AD, R1, AD1) de cadence un prédiviseur (VT) ayant un diviseur en nombre entier, notamment un diviseur qui n'est pas une puissance de base 2.

**9.** Dispositif suivant l'une des revendications précédentes, **caractérisé**

- **en ce qu'**un compteur (AR, R2) pouvant être remis à l'état initial compte la cadence de sortie ; et
- **en ce que** le moyen de commande (ES) d'événements comprend une mémoire à table dans laquelle des événements sont associés à des états de compteur qui dépendent de la trame de temps choisie, le moyen de commande (ES) d'événements déclenchant un événement lorsque le compteur (AR, R2) pouvant être remis à zéro a atteint l'état de compteur associé à l'événement.

**10.** Dispositif suivant la revendication 9, **caractérisé**

- **en ce que** le moyen de commande (ES) d'événements produit un signal (R, $r_1$, $r_2$, r) de remise à zéro qui remet le compteur (AR, R2) pouvant être remis à zéro selon la trame de temps choisie.

**11.** Dispositif suivant l'une des revendications précédentes, **caractérisé**

- **en ce que** le moyen (TT) de diviseur de cadence est conçu pour produire des trames de temps suivant au moins deux des standards GSM ou EDGE et TIA/EIA-136 et UMTS.

**12.** Procédé de commande synchronisée d'un dispositif d'émission et/ou de réception dans une station mobile d'un système de communication, le dispositif d'émission et/ou de réception étant conçu pour l'émission/la réception de signaux de standards téléphoniques mobiles différents ayant des trames de temps différentes, comprenant les stades :

- de production d'une cadence ($T_1$) de système unitaire pour les trames de temps qui diffèrent ;
- de production d'une cadence ($T_2$) de sortie correspondant à l'une des trames de temps qui diffèrent sur la base de la cadence ($T_1$) de système unitaire par prescription d'au moins un paramètre de commande par lequel la durée moyenne de la période de la cadence ($T_2$) de sortie peut être réglée ; et
- de commande dans le temps d'événements sur la base de la cadence ($T_2$) de sortie produite et d'une information d'événement.

**GSM/EDGE**

- Syst.-Takt
- $T_1 = 9{,}615\text{ns}$
- × 48
- Tick
- $T_2 = 0{,}4615\mu\text{s}$
- × 8
- Symbol — $T_S = 3{,}692\mu\text{s}$
- × 156,25
- Schlitz — $T_{SL} = 576{,}9\mu\text{s}$
- × 8
- Rahmen — $T_R = 4{,}615\text{ms}$

**TIA/EIA-136**

- Syst.-Takt
- $T_1 = 9{,}615\text{ns}$
- × 130 000/243 ≈ 534,98
- Tick
- $T_2 = 5{,}144\mu\text{s}$
- × 8
- Symbol — $T_S = 41{,}15\mu\text{s}$
- × 162
- Schlitz — $T_{SL} = 6{,}66\text{ms}$
- × 6
- Rahmen — $T_R = 40{,}0\text{ms}$

Fig.1

Fig.2

Fig.3

Fig.4

Fig.5

Fig.6

Fig.7